# EUROPÄISCHE PATENTSCHRIFT

(11) **EP 0 464 373 B1**
(45) Veröffentlichungstag und Bekanntmachung des Hinweises auf die Patenterteilung: **20.10.1993**
(21) Anmeldenummer: 91108827.6
(22) Anmeldetag: 29.05.1991
(51) Int. Cl.: F16B 7/04

(54) **Verbindungselement**
Connecting element
Elément de connection

(30) Priorität: 12.06.1990 DE 4018817
(43) Veröffentlichungstag der Anmeldung: 08.01.1992
(73) Patentinhaber: Exibelco GmbH, CH-4123 Allschwil (CH)
(72) Erfinder: Späth, Werner F., W-6000 Frankfurt am Main 1 (DE)
(74) Vertreter: Schaafhausen, Ludwig Richard, Dipl.-Phys.

(56) Entgegenhaltungen:
- EP-A- 0 160 196
- EP-A- 0 178 369
- DE-U- 7 341 203

## Beschreibung

Die Erfindung betrifft ein Verbindungselement zum lösbaren Verbinden zweier Gestellbauteile, insbesondere eines Stützenprofils und eines Zargenprofils, wobei das Verbindungselement in dem als Hohlprofil ausgebildeten Zargenprofil ortsfest angeordnet ist und in einem Gehäuse mindestens ein bewegliches Halteelement aufweist, mit dem das Verbindungselement und damit auch das Zargenprofil lösbar mit dem Stützenprofil verbindbar ist, und wobei in dem Gehäuse ein Exzenterbolzen drehgelagert angeordnet ist, der mindestens einen Exzenterkopf, eine Exzenterscheibe und einen Lagerzapfen aufweist, mittels dem das Halteelement längsbeweglich in dem Gehäuse geführt ist, wodurch ein aus der Stirnseite des Gehäuses herausragendes Bauteil des Halteelementes mit einer hinterschnittenen Längsnut des Stützenprofils in Eingriff bringbar ist, und wobei der Exzenterkopf des in das Gehäuse gegen die Kraft einer Feder eindrückbaren Exzenterbolzens in eine Bohrung des Zargenprofils einrastbar ist, sowie mit einer in Einschublage des Halteelementes die axiale Bewegbarkeit des Exzenterbolzens verhindernden Sicherung.

Derartige Verbindungselemente sind in vielfältigen Ausgestaltungen bekannt und werden insbesondere zur Verbindung von Stützenprofilen und Zargenprofilen verwendet, mit denen u.a. Messe- und Ausstellungsstände und Ladeneinrichtungen errichtet werden. Die Verbindung soll dabei einerseits äußerst fest, andererseits aber auch leicht herstellbar und wieder lösbar sein. Zum leichten Einsetzen und Ausbauen eines Verbindungselements in ein Zargenprofil ist der federbelastete Exzenter druckknopfartig in das Gehäuse des Verbindungselementes eindrückbar.

Damit dieses Eindrücken nicht versehentlich erfolgt, insbesondere nicht bei zusammengebauten Profilstangen, ist in der DE-C-31 53 232 vorgeschlagen worden, als Sicherung einen ortsfesten Anschlag im Inneren des Lagergehäuses vorzusehen, der bezüglich eines zur Anlage des Exzenterbolzens im Eindrücksinne dienenden Endstücks des Halteelementes derart angeordnet ist, daß der Anschlag in Ausschublage des Halteelementes sich zwar außerhalb des Endstückes befindet und daher dessen Quer-Verschwenkbarkeit zuläßt, aber in Einschublage des Halteelementes unter dem Endstück liegt und dessen Quer-Verschwenkbarkeit blockiert.

Da bei einer solchen Eindrückverhinderung der gehäusefeste Anschlag so dimensioniert wird, daß er im wesentlichen nur in der Endphase des Festziehvorganges unter das Halteelement zu liegen kommt und damit dessen Quer-Verschwenkbarkeit blockiert, es sich jedoch als wünschenswert erwiesen hat, daß der Exzenterbolzen bereits in einem frühen Stadium des Verbindungsvorganges an einem unbeabsichtigten Eindrücken gehindert wird, ist in der EP-B-0 160 196 bereits ein Verbindungselement vorgeschlagen worden, bei der die Exzenterscheibe fast während des gesamten Verbindungsvorganges in einem Schlitz im Gehäuse des Verbindungselementes geführt wird, so daß der Exzenter nicht in das Gehäuse eingedrückt werden kann. Bei einer derartigen Eindrückverhinderung müssen die geometrischen Verhältnisse des Verbindungselementes es jedoch zulassen, daß sich die Exzenterscheibe während des Verbindungsvorganges in dem Schlitz des Gehäuses befindet. Lediglich wenn sich das Halteelement in seiner Ausschublage befindet, soll es eingedrückt werden können. Wenn das Halteelement fest angezogen ist, braucht die Exzenterscheibe sich nicht mehr in dem Schlitz des Gehäuses zu befinden, da bereits der Kraftschluß des Halteelementes dessen Eindrückbarkeit verhindert.

In der EP-A-0 371 153 ist daher bereits ein Verbindungselement der eingangs genannten Art beschrieben, bei dem eine Sicherung vorgesehen ist, die in einem definierten Bereich des Verbindungsvorgangs ein unbeabsichtigtes Eindrücken des Exzenters verhindert, in einem ebenfalls vorherbestimmbaren Bereich, insbesondere in der Ausschublage des Halteelementes, eine axiale Beweglichkeit des Exzenters jedoch zuläßt. Dies wird dadurch erreicht, daß die Sicherung aus einem am Exzenterbolzen vorgesehenen Vorsprung und einer im Gehäuse ausgebildeten Ausnehmung besteht, wobei der Vorsprung und die Ausnehmung derart zueinander angeordnet sind, daß der Vorsprung zwar im Bereich der Ausschublage des Halteelementes in die Ausnehmung eindrückbar ist und somit eine axiale Bewegbarkeit des Exzenters zuläßt, aber in Einschublage des Halteelementes nicht eindrückbar ist und der Exzenter dadurch an einer axialen Bewegbarkeit gehindert wird. Eine solche Eindrückverhinderung läßt sich zwar mit geringem Aufwand ggfs. auch nachträglich an unterschiedlichsten Verbindungselementen anbringen, es besteht jedoch immer noch der bei den meisten auf dem Markt befindlichen Verbindungselementen bekannte Nachteil, daß das Halteelement bei einem Festziehvorgang von der Exzenterscheibe springt, wodurch sich die Verbindung wieder löst. Dies kann dazu führen, daß ein sicheres Befestigen nicht möglich ist.

Aufgabe der vorliegenden Erfindung ist es daher, ein Verbindungselement der eingangs genannten Art mit einer Eindrückverhinderung zu schaffen, bei der gewährleistet ist, daß ein unbeabsichtigtes Abspringen des Halteelementes von der Exzenterscheibe nicht möglich ist.

Diese Aufgabe wird erfindungsgemäß dadurch gelöst, daß die Sicherung aus mindestens einem am beweglichen Halteelement ausgebildeten Nocken und mindestens einer im Gehäuseboden ausgebildeten Ausnehmung besteht, wobei der Nocken und die Ausnehmung derart zueinander angeordnet und dimensioniert sind, daß der Nocken in Ausschublage des Halteelementes gegenüber der Ausnehmung im Gehäuseboden zu liegen kommt und dabei eine axiale Bewegbarkeit des Exzenterbolzens zuläßt, in Einschublage des Halteelementes aber außer Eingriff mit der Ausnehmung ist und sich am Gehäuseboden abstützt und der Exzenterbolzen dadurch an einer axialen Bewegbarkeit gehindert wird. Befindet sich das Verbindungselement in seiner gelösten Stellung, in der das Halteelement nach außen geschoben ist, liegt der Nocken am Halteelement der Ausnehmung im Gehäuseboden gegenüber, so daß bei einem Eindrücken des Exzenterbolzens gegen die Kraft der Feder das Halteelement nachgibt, da der Nocken in die Ausnehmung ausweichen kann. Wird während eines Anziehvorganges jedoch das Halteelement durch Betätigen des Exzenterbolzens in das Gehäuse gezogen, gleitet der Nocken aus der Ausnehmung in dem Gehäuseboden auf den eigentlichen Gehäuseboden, was durch die Feder unterstützt wird. Wird nun auf den Exzenterbolzen ein Druck ausgeübt, kann das Halteelement nicht mehr nachgeben, da sich der Nocken am Gehäuseboden abstützt.

Um eine besonders sichere Führung des Halteelementes zu gewährleisten, sind an dem beweglichen Halteelement zwei Nocken im Bereich zwischen der Durchtrittsöffnung im Gehäuseboden für den Lagerzapfen des Exzenterbolzens und der Angriffsfläche der Feder am Gehäuseboden ausgebildet. Insbesondere bei größeren Verbindungselementen kann es vorteilhaft sein, daß auch im hinteren Abschnitt des beweglichen Halteelementes ein zusätzlicher Nocken ausgebildet ist. Damit erhält das Halteelement in dem Gehäuse eine zusätzliche Führungsstabilität und es wird verhindert, daß sich bei einem besonders kräftigen Anziehvorgang das bewegliche Halteelement verkantet und der Anziehvorgang unterbrochen und neu begonnen werden muß.

Die erfindungsgemäßen Nocken lassen sich bei einem Verbindungselement, bei dem das bewegliche Halteelement aus Stahlblech besteht, besonders einfach dadurch herstellen, daß die Nocken in das Halteelement eingepreßt sind. Ebenso einfach lassen sich die Ausnehmungen im Gehäuseboden durch Ansenkungen ausbilden.

Um eine zusätzliche Sicherung gegen ein unbeabsichtigtes Abspringen des beweglichen Halteelementes von der Exzenterscheibe zu schaffen, ist in Weiterbildung des Erfindungsgedankens vorgesehen, daß bei einem Halteelement, daß in seinem vorderen Bereich eine Ausnehmung aufweist, durch die ein Führungszapfen greift, der am Gehäuseboden ausgebildet ist, im vorderen Endbereich des Gehäusedeckels des Verbindungselementes an dessen Unterseite zwei Vorsprünge ausgebildet sind, die zwischen sich den Führungszapfen von zwei Seiten einschließen und bis unter die Oberkante des Führungszapfens in das Gehäuse ragen. Damit ist auch bei großen Herstellungstoleranzen und extremen Anziehkräften gewährleistet, daß das Halteelement durch die beiden Vorsprünge sicher an der Exzenterscheibe gehalten wird.

Gemäß einer weiteren Ausgestaltung dieses Erfindungsgedankens ist an der Vorderseite des Führungszapfens eine Auflaufschräge ausgebildet. Diese sorgt für eine zusätzliche Stabilisierung des Halteelementes und verhindert ein seitliches Wegdrücken des Halteelementes.

Weitere Merkmale, Vorteile und Anwendungsmöglichkeiten der Erfindung ergeben sich aus der nachfolgenden Beschreibung von Ausführungsbeispielen, die in der Zeichnung dargestellt sind. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: eine Draufsicht auf das Gehäuse eines erfindungsgemäßen Verbindungselementes,
- Fig. 2: einen Schnitt entlang der Linie II - II in Fig. 1,
- Fig. 3: eine Draufsicht auf ein Halteelement zur Verwendung in dem Gehäuse gemäß Fig. 1,
- Fig. 4: eine Seitenansicht auf das in Fig. 3 dargestellt Halteelement,
- Fig. 5: eine Ansicht von vorne auf das in Fig. 3 dargestellt Halteelement,
- Fig. 6: eine Draufsicht auf einen Deckel zur Verwendung mit dem Gehäuse gemäß Fig. 1,
- Fig. 7: eine Seitenansicht auf den in Fig. 6 dargestellten Deckel,
- Fig. 8: eine Ansicht von vorne auf den in Fig. 6 dargestellten Deckel,
- Fig. 9: eine Draufsicht auf das Gehäuse einer weiteren Ausführungsform eines erfindungsgemäßen Verbindungselementes,
- Fig. 10: einen Schnitt entlang der Linie X - X in Fig. 9,
- Fig. 11: eine Draufsicht auf ein Halteelement zur Verwendung in dem Gehäuse gemäß Fig. 10,
- Fig. 12: eine Seitenansicht auf das in Fig. 11 dargestellte Halteelement,
- Fig. 13: eine Ansicht von vorne auf das in Fig. 11 dargestellte Halteelement,
- Fig. 14: eine Draufsicht auf einen Deckel zur Verwendung mit dem in Fig. 9 dargestellten Gehäuse,
- Fig. 15: eine Seitenansicht eines erfindungsgemäßen Exzenterbolzens und
- Fig. 16: eine Draufsicht auf den in Fig. 15 dargestellten Exzenterbolzen.

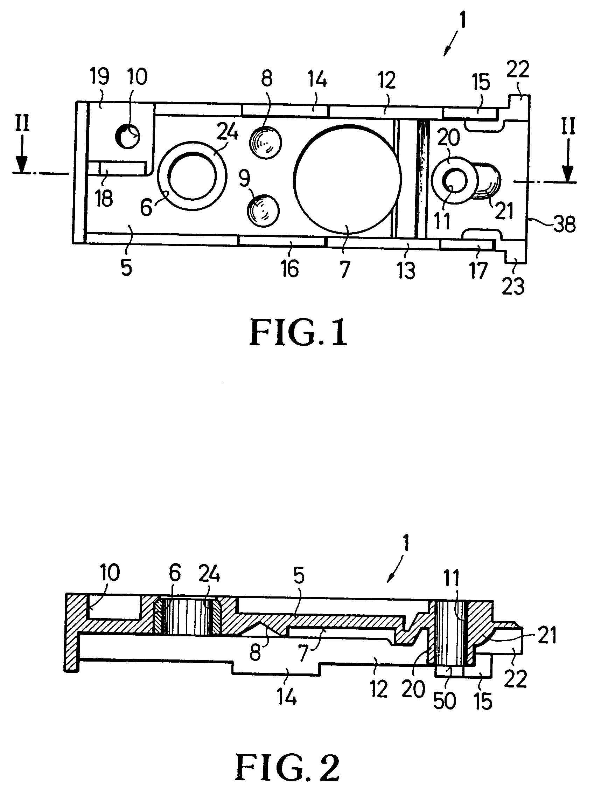

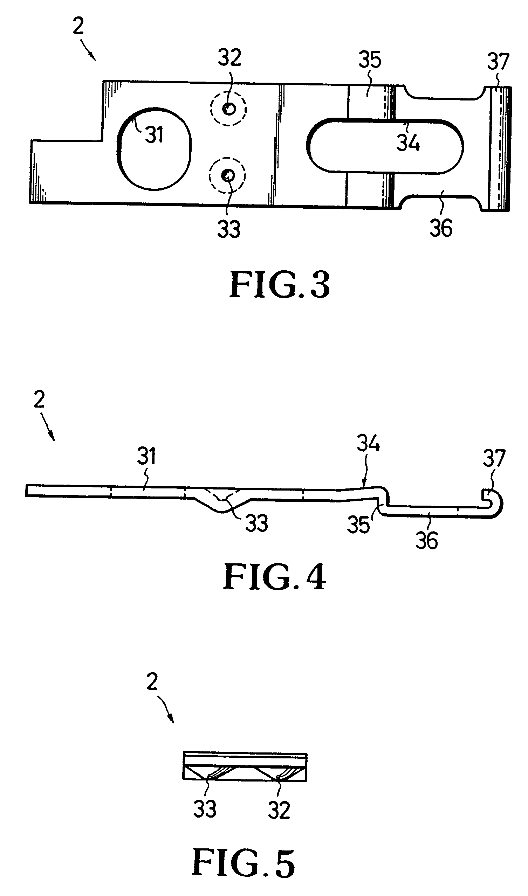

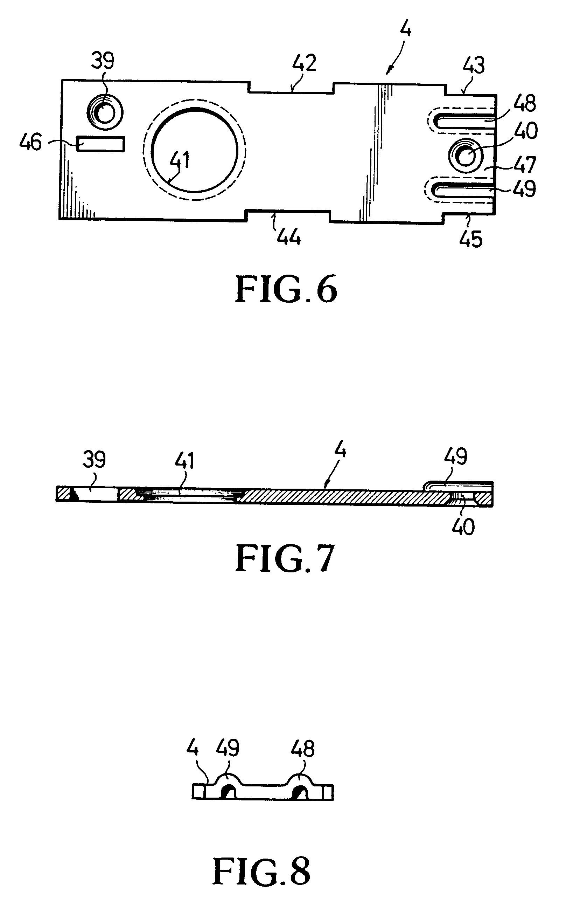

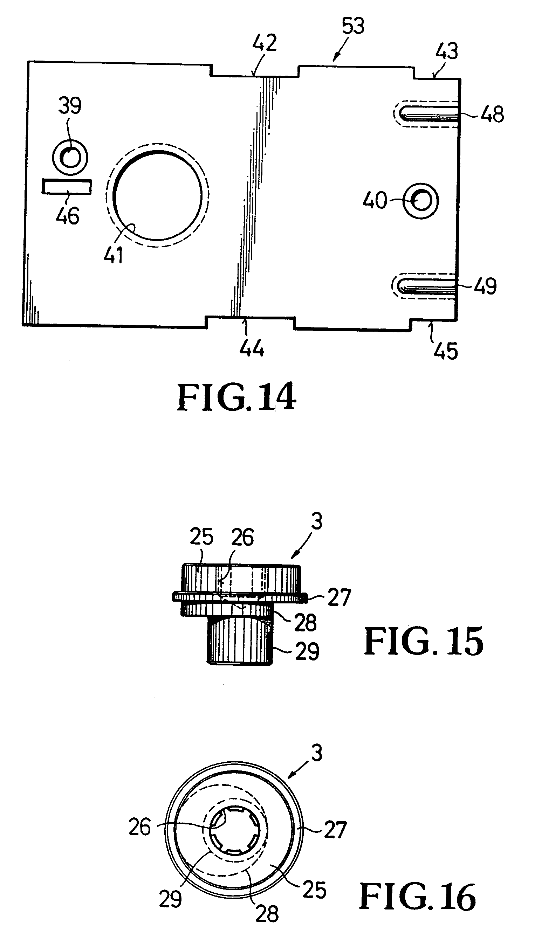

Das Verbindungselement besteht aus einem Gehäuse 1 (Fig. 1 und 2), in dem ein Halteelement 2 (Fig. 3 bis 5) längsverschieblich angeordnet ist, einem Exzenterbolzen 3 (Fig. 15 und 16), einer (nicht dargestellten) Druckfeder und einem Gehäusedeckel 4 (Fig. 6 bis 8).

Das Gehäuse 1 besteht aus einem Gehäuseboden 5, in dem eine Durchtrittsöffnung 6 für den Lagerzapfen des Exzenterbolzens 4, eine flache, kreisförmige Ausnehmung 7 zur Aufnahme der nicht dargestellten Druckfeder, Zwei Ausnehmungen 8 und 9 in Form von Ansenkungen und Zwei Öffnungen 10 und 11 zur Aufnahme von Verbindungselementen zum Verbinden des Gehäuses 1 mit dem Gehäusedeckel 4.

Zur sicheren Verbindung des Gehäuses 1 mit dem Gehäusedeckel 4 sind in den Seitenwänden 12 und 13 außerdem Vorsprünge 14, 15 und 16, 17 ausgebildet. Dem gleichen Zweck dient ein Vorsprung 18, der am Rand einer Materialverdickung 19 im Gehäuseboden angeordnet ist, in der die Öffnung 10 für das Verbindungselement zum Verbinden des Gehäuses 1 mit dem Gehäusedeckel 4 ausgebildet ist. Die Zweite Öffnung 11 zur Verbindung des Gehäuses 1 mit dem Gehäusedeckel 4 ist in einem Führungszapfen 20 ausgebildet, an dessen Stirnseite eine Auflaufschräge 21 angeordnet ist.

An der Stirnseite 38 des Gehäuses 1 sind seitlich vorstehende Kupplungsnasen 22 und 23 vorgesehen, die dazu dienen, daß das Verbindungselement nicht über seine vorgesehene Lage hinaus in ein Zargenprofil eingeschoben werden kann.

Zur sicheren Führung des in den Fig. 15 und 16 dargestellten Exzenterbolzens 3 ist in der Durchtrittsöffnung 6 eine Ringbuchse 24 angeordnet. Der Exzenterbolzen 3 besteht aus einem Exzenterkopf 25 mit einer als Werkzeugaufnahme dienenden zentralen Öffnung 26. An den Exzenterkopf 25 schließt sich eine hierzu konzentrisch angeordnete Stützscheibe 27 an, die einen etwas größeren Durchmesser als der Exzenterkopf 25 hat. Mit der stützscheibe 27 ist eine Exzenterscheibe 28 einstückig verbunden, an der sich wiederum der Lagerzapfen 29 des Exzenterbolzens 3 anschließt.

Das in Fig. 3 dargestellte Halteelement 2 besteht aus einem Stahlblech, in dessen hinteren Abschnitt eine quer zur Längsrichtung verlaufende ovale Durchtrittsöffnung 31 für die Exzenterscheibe 28 des Exzenterbolzens 3 ausgebildet ist. Davor sind zwei Nocken 32 und 33 in das Stahlblech des Halteelementes 2 eingepreßt. Ihr Abstand voneinander entspricht dem der Ausnehmungen 8 und 9 in dem Gehäuseboden 5. Vor den Nocken 32 und 33 ist in dem Halteelement 2 eine in Längsrichtung des Halteelementes verlaufende längliche Ausnehmung 34 ausgebildet, die zur Führung des Führungszapfens 20 des Gehäuses 1 dient.

Wie insbesondere der Seitenansicht gemäß Fig. 4 entnommen werden kann, weist das Halteelement 2 im Bereich der Ausnehmung 34 eine Abbiegung 35 auf, an die sich nach vorne ein waagrechter Abschnitt 36 anschließt, der in einen zurückgebogenen Verbindungshaken 37 endet. Der Verbindungshaken 37 steht in der gelösten Stellung des Verbindungselementes aus der Stirnseite 38 des Gehäuses 1 hervor.

Das Gehäuse 1 wird durch den in Fig. 6 dargestellten Gehäusedeckel 4 verschlossen. Dafür sind in dem hinteren und vorderen Bereich des Gehäusedeckels 4 Öffnungen 39 und 40 vorgesehen, die mit den Öffnungen 10 und 11 in dem Gehäuse 1 fluchten und zur Aufnahme der (nicht dargestellten) Verbindungselemente dienen. Gegenüber der Durchtrittsöffnung 6 in dem Gehäuseboden 5 ist eine kreisförmige Öffnung 41 in dem Gehäusedeckel 5 ausgebildet, durch die der Exzenterkopf 25 des Exzenterbolzens 3 hindurchtritt und an deren Randfläche sich dessen Stützscheibe 27 abstützt.

Gegenüber den Vorsprüngen 14 bis 18 im Gehäuse 1 sind am Rand des Gehäusedeckels 4 seitliche Aussparungen 42, 43 und 44, 45 sowie am Rand der Materialverdickung 19 eine rechteckförmige Aussparung 46 vorgesehen.

Im vorderen Endbereich 47 des Gehäusedeckels 4 sind an dessen Unterseite zwei längliche Vorsprünge 48 und 49 ausgebildet, die einen solchen Abstand voneinander aufweisen, daß sie zwischen sich den am Gehäuseboden 5 ausgebildeten Führungszapfen 20 einschließen und im geschlossenen Zustand bis unter die Oberkante 50 des Führungszapfens 20 in das Gehäuse 1 hineinragen.

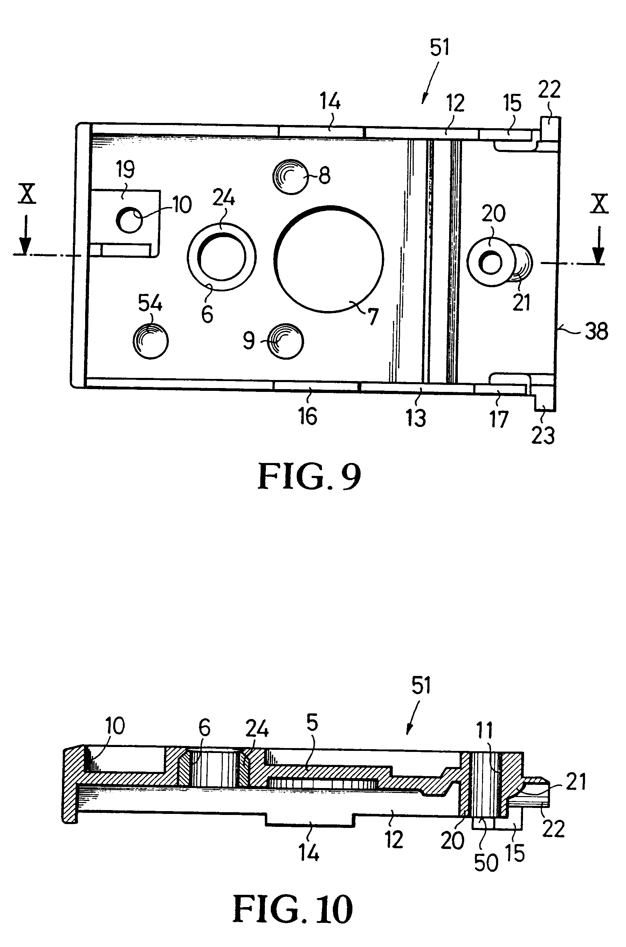

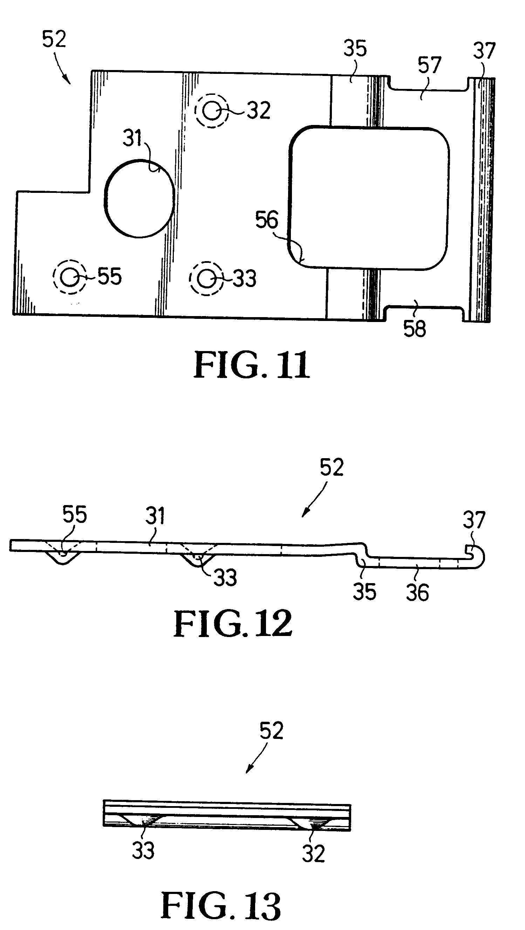

Die in den Fig. 9 bis 14 dargestellte weitere Ausführungsform eines erfindungsgemäßen Verbindungselementes unterscheidet sich von dem in den Fig. 1 bis 8 dargestellten Ausführungsbeispiel im wesentlichen nur dadurch, daß das Gehäuse 51, das Halteelement 52 und der Gehäusedeckel 53 breiter als das entsprechende Gehäuse 1, das Halteelement 2 und der Gehäusedeckel 4 des eingangs beschriebenen Ausführungsbeispiels sind. Es sind daher auch gleiche bzw. weitgehend gleiche Teile mit gleichen Bezugszeichen versehen.

Das Gehäuse 51 unterscheidet sich von dem Gehäuse 1 im wesentlichen nur durch die zusätzliche Ansenkung 54 im rückwärtigen Teil des Gehäusebodens 5, womit auch das Halteelment 52 einen zusätzlichen Nocken 55 aufweist.

Da für beide Ausführungsformen der gleiche Exzenterbolzen 3 zur Anwendung kommt, ist die Durchtrittsöffnung 31 in dem Halteelement 52 für die Exzenterscheibe 28 des Exzenterbolzens 3 identisch der ovalen Durchtrittsöffnung 31 in dem Halteelement 2. Lediglich die Ausnehmung 56 im vorderen Abschnitt des Halteelementes 52 ist im Gegensatz zu der länglichen Ausnehmung 34 im Halteelement 2 quadratförmig ausgebildet. Folglich sind auch die länglichen Vorsprünge 48 und 49 in dem Gehäusedeckel 53 weiter auseinander als im Gehäusedeckel 4 angeordnet und zwar derart, daß die Vorsprünge 48 und 49 über den neben der quadratförmigen Ausnehmung 46 sich befindlichen Seitenabschnitten 57 und 58 des Halteelementes 52 zu liegen kommen.

Nachfolgend wird der Zusammenbau und die Funktionsweise des Verbindungselementes anhand der in den Fig. 1 bis 8 dargestellten kleinen Ausführungsform beschrieben, die im Fall der breiten Ausführungsform gemäß den Fig. 9 bis 14 identisch ist:

Zunächst wird in die kreisförmige Ausnehmung 7 in dem Gehäuse 1 eine nicht dargestellte Spiraldruckfeder eingesetzt. Hierauf wird das aus einem Stahlblech bestehende Halteelement 2 gelegt, in dessen ovale Durchtrittsöffnung 31 der Exzenterbolzen 3 so mit seiner Exzenterscheibe 28 eingesetzt wird, daß der Lagerzapfen 29 in die Ringbuchse 24 in der Durchtrittsöffnung 6 eingreift. Darauf wird das Gehäuse 1 mit dem Gehäusedeckel 4 verschlossen, wobei der Exzenterkopf 25 durch die Öffnung 41 hindurchtritt und der Gehäusedeckel 4 auf der Stützscheibe 27 des Exzenterbolzens 3 aufliegt. Danach werden der Gehäusedeckel 4 und das Gehäuse 1 durch nicht dargestellte Verbindungselemente an den Punkten 10, 11 und 39, 40 fest miteinander verbunden.

Damit das zusammengesetzte Verbindungselement in ein Zargenprofil eingesetzt werden kann, ist es zunächst durch Drehen des Exzenterbolzens 3 mittels eines geeigneten Schraubendrehers od. dgl., der in der zentralen Öffnung 26 in dem Exzenterkopf 25 angreift, in seine Lösestellung zu bringen. In dieser ist das Halteelement 2 aus dem Gehäuse 1 herausgefahren und die Nocken 32 und 33 liegen über den Ansenkungen 7 und 8. Damit kann der Exzenterbolzen 3 in das Gehäuse so weit eingedrückt werden, daß die Oberfläche des Exzenterkopfes 25 annähernd mit der Oberfläche des Gehäusedeckels 4 fluchtet. Dadurch, daß die Nocken 33 und 34 in die Ansenkungen 8 und 9 in dem Gehäuseboden 5 eingreifen können, kann der Exzenterbolzen 3 so weit in das Gehäuse eingedrückt werden, bis das Halteelement 2 annähernd auf dem Gehäuseboden 5 zu liegen kommt.

In dieser eingedrückten Stellung des Exzenterbolzens 3 läßt sich das Verbindungselement so weit in ein Zargenprofil einschieben, bis der Exzenterkopf 25 über einer kreisförmigen Öffnung im Zargenprofil zu liegen kommt, in der der Exzenterkopf durch die Kraft der unter dem Halteelement 2 angeordneten Druckfeder nach außen durch die Öffnung in dem Zargenprofil gedrückt wird und in dieser Stellung das Verbindungselement in dem Zargenprofil festhält. Ein unbeabsichtigtes Weiteres Einschieben des Verbindungselementes wird durch die Kupplungsnasen 22 und 23 an der Stirnseite des Gehäuses verhindert.

Wird nun das Halteelement 2 durch Drehen des Exzenterbolzens 3 in das Gehäuse 1 hereingezogen und damit auch das Stützenprofil an ein Zargenprofil herangezogen und schließlich befestigt, bewegen sich die Nocken 32 und 33 aus den Ansenkungen 7 und 8 heraus, welche Bewegung durch die Kraft der unter dem Halteelement 2 angeordneten Druckfeder erleichtert wird. Sobald die Nocken 32 und 33 sich nicht mehr in den als Ansenkungen ausgebildeten Ausnehmungen 7 und 8 im Gehäuseboden 5 befinden, ist der Exzenterkopf 25 nicht mehr in das Gehäuse so weit eindrückbar, daß der Exzenterkopf außer Eingriff mit dem Rand der Lochung in dem Stützenprofil kommt und das Verbindungselement damit nicht mehr in dem Stützenprofil gehalten ist. Bei entsprechender Dimensionierung der Nocken kann erreicht werden, daß keinerlei Eindrücken des Exzenterbolzens in das Gehäuse mehr möglich ist, wenn die Nocken 32 und 33 sich auf dem Gehäuseboden 5 abstützen.

In dieser Lage, in der ein Eindrücken des Exzenterbolzens nicht mehr möglich ist, wird das Halteelement durch Weiterdrehen des Schraubendrehers od. dgl. in seine Endposition bewegt, in der das Zargenprofil formschlüssig mit dem Stützenprofil verbunden ist.

Das Lösen des Verbindungselementes erfolgt durch umgekehrtes Drehen des Schraubendrehers od. dgl. bis zu einer Stellung, in der die Nocken 32 und 33 an dem Halteelement 2 über den Ausnehmungen 7 und 8 im Gehäuseboden 4 zu liegen kommen, in der der Exzenterkopf 25 wieder so weit in das Gehäuse eindrückbar ist, daß er außer Eingriff mit dem Zargenprofil gelangt, womit das Verbindungselement bei Bedarf wieder aus dem Zargenprofil entfernt werden kann.

Durch die länglichen Vorsprünge 48 und 49 an der Unterseite des Gehäusedeckels wird erreicht, daß das Halteelement 2 auch bei einem kräftigen Anziehen nicht von der Exzenterscheibe 28 abhebt und sich die Verbindung damit wieder löst. Die Vorsprünge 48 und 49 drücken das Halteelement 2 gleichmäßig nach unten und eine an der Vorderseite des Führungszapfens 20 angeordnete Auflaufschräge 21 stabilisiert während des Anziehvorganges das Halteelement 2 zusätzlich und verhindert damit ein seitliches Wegdrücken des Halteelementes. Damit hat das Halteelement keine Möglichkeit mehr, einer aufgebrachten starken Kraft in einer anderen als der gewünschten Anzugsrichtung auszuweichen. Damit wird eine kontrollierte, sichere Befestigung eines Stützenprofils an einem Zargenprofil gewährleistet.

### Bezugszeichenliste:

- 1: Gehäuse
- 2: Halteelement
- 3: Exzenterbolzen
- 4: Gehäusedeckel
- 5: Gehäuseboden
- 6: Durchtrittsöffnung
- 7: Ausnehmung
- 8: Ausnehmung (Ansenkung)
- 9: Ausnehmung (Ansenkung)
- 10: Öffnung
- 11: Öffnung
- 12: Seitenwand
- 13: Seitenwand
- 14: Vorsprung
- 15: Vorsprung
- 16: Vorsprung
- 17: Vorsprung
- 18: Vorsprung
- 19: Materialverdickung
- 20: Führungszapfen
- 21: Auflaufschräge
- 22: Kupplungsnase
- 23: Kupplungsnase
- 24: Ringbuchse
- 25: Exzenterkopf
- 26: zentrale Öffnung
- 27: Stützscheibe
- 28: Exzenterscheibe
- 29: Lagerzapfen
- 30: -
- 31: ovale Durchtrittsöffnung
- 32: Nocken
- 33: Nocken
- 34: Ausnehmung
- 35: Abbiegung
- 36: waagrechter Abschnitt
- 37: Verbindungshaken
- 38: Stirnseite
- 39: Öffnung
- 40: Öffnung
- 41: Öffnung
- 42: seitliche Aussparung
- 43: seitliche Aussparung
- 44: seitliche Aussparung
- 45: seitliche Aussparung
- 46: Aussparung
- 47: vorderer Endbereich
- 48: Vorsprung
- 49: Vorsprung
- 50: Oberkante von 20
- 51: Gehäuse
- 52: Halteelement
- 53: Gehäusedeckel
- 54: Ausnehmung (Ansenkung)
- 55: Nocken
- 56: Ausnehmung
- 57: Seitenabschnitt
- 58: Seitenabschnitt

## Patentansprüche

1. Verbindungselement zum lösbaren Verbinden zweier Gestellbauteile, insbesondere eines Stützenprofils und eines Zargenprofils, wobei das Verbindungselement in dem als Hohlprofil ausgebildeten Zargenprofil ortsfest angeordnet ist und in einem Gehäuse mindestens ein bewegliches Halteelement aufweist, mit dem das Verbindungselement und damit auch das Zargenprofil lösbar mit dem Stützenprofil verbindbar ist, und wobei in dem Gehäuse ein Exzenterbolzen drehgelagert angeordnet ist, der mindestens einen Exzenterkopf, eine Exzenterscheibe und einen Lagerzapfen aufweist, mittels dem das Halteelement längsbeweglich in dem Gehäuse geführt ist, wodurch ein aus der Stirnseite des Gehäuses herausragendes Bauteil des Halteelementes mit einer hinterschnittenen Längsnut des Stützenprofils in Eingriff bringbar ist, und wobei der Exzenterkopf des in das Gehäuse gegen die Kraft einer Feder eindrückbaren Exzenterbolzens in eine Bohrung des Zargenprofils einrastbar ist, sowie mit einer in Einschublage des Halteelementes die axiale Bewegbarkeit des Exzenterbolzens verhindernden Sicherung, dadurch gekennzeichnet, daß die Sicherung aus mindestens einem am beweglichen Halteelement (2, 52) ausgebildeten Nocken (32, 33, 55) und mindestens einer im Gehäuseboden (5) ausgebildeten Ausnehmung (8, 9, 54) besteht, wobei der Nocken (32, 33, 55) und die Ausnehmung (7, 8, 54) derart zueinander angeordnet und dimensioniert sind, daß der Nocken (32, 33, 55) in Ausschublage des Halteelementes (2, 52) gegenüber der Ausnehmung (8, 9, 54) im Gehäuseboden (5) zu liegen kommt und dabei eine axiale Bewegbarkeit des Exzenterbolzens (3) zuläßt, in Einschublage des Halteelementes (2, 52) aber außer Eingriff mit der Ausnehmung (7, 8, 54) ist und sich am Gehäuseboden (5) abstützt und der Exzenterbolzen (3) dadurch an einer axialen Bewegbarkeit gehindert wird.

2. Verbindungselement nach Anspruch 1, dadurch gekennzeichnet, daß am beweglichen Halteelement (2, 52) zwei Nocken (32, 33) im Bereich zwischen der Durchtrittsöffnung (6) im Gehäuseboden (5) für den Lagerzapfen (29) des Exzenterbolzens (3) und der Ausnehmung (7) für die Aufnahme der Feder ausgebildet sind.

3. Verbindungselement nach Anspruch 2, dadurch gekennzeichnet, daß im hinteren Abschnitt des beweglichen Halteelementes (52) ein Weiterer Nocken (55) ausgebildet ist.

4. Verbindungselement nach einem der Ansprüche 1 bis 3, wobei das bewegliche Halteelement aus Stahlblech besteht, dadurch gekennzeichnet, daß die Nocken (32, 33, 55) in das Halteelement (2, 52) eingepreßt sind.

5. Verbindungselement nach einem der Ansprüche 1 bis 3, dadurch gekennzeichnet, daß die Ausnehmungen (8, 9, 54) im Gehäuseboden (5) durch Ansenkungen gebildet sind.

6. Verbindungselement nach Anspruch 1, wobei das bewegliche Halteelment in seinem vorderen Bereich eine Ausnehmung aufweist, durch die ein Führungszapfen greift, der am Gehäuseboden angeordnet ist, dadurch gekennzeichnet, daß im vorderen Endbereich (47) des Gehäusedeckels (4, 53) an dessen Unterseite zwei Vorsprünge (48, 49) ausgebildet sind, die zwischen sich den Führungszapfen (20) einschließen und bis unter die Oberkante (50) des Führungszapfens (20) in das Gehäuse (1) ragen.

7. Verbindungselement nach Anspruch 6, dadurch gekennzeichnet, daß an der Vorderseite des Führungszapfens (20) eine Auflaufschräge (21) ausgebildet ist.

## Claims

1. A connecting element for releasably connecting two framework components, in particular, a supporting section and a frame section, with the connecting element being fixedly arranged in the frame section which is in the form of a hollow section member and having in a housing at least one movable retaining element with which the connecting element and, hence, also the frame section, can be releasably connected to the support section, and with an eccenter bolt being rotatably mounted in the housing which eccenter bolt comprises at least one eccenter head, an eccenter disc and a bearing pinion by way of which the retaining element is guided longitudinally in the said housing, thereby causing a component of the retaining element protruding from the front side of the housing to be arranged to be brought into engagement with an undercut longitudinal groove of the support section, and with the eccenter head of the eccenter bolt being arranged to be enforceable into the housing against the force of a spring to engage a bore of the frame section, and comprising a securing means preventing the eccenter bolt from moving axially in the inserted state of the retaining element, characterized in that the securing means consists of at least one projection (32,33,55) formed on the movable retaining element (2,52) and at least one recess (8,9,54) formed in the housing bottom (5), with the projection (32,33,55) and the recess (7,8,54) being disposed and dimensioned relative to one another such that the projection (32,33,55), in the withdrawing position of the retaining element (2,52) vis-à-vis the recess (8,9,54) is arranged within the housing bottom (5), thereby permitting an axial movability of the eccenter bolt (3) while, in the insertion position of the retaining element (2,52), it is out of engagement with the recess (7,8,54) and is supported on the housing bottom (5), thereby preventing the eccenter bolt (3) from being axially moved.

2. A connecting element according to claim 1, characterized in that two projections (32,33) are formed on the movable retaining element (2,52) in the area between the passage opening (6) in the housing bottom (5) for the bearing pinion (29) of the eccenter bolt (3) and the recess (7) for accommodating the spring.

3. A connecting element according to claim 2, characterized in that another projection (55) is formed in the rear section of the movable retaining element (52).

4. A connecting element according to any one of claims 1 to 3, with the movable retaining element being made of sheet steel, characterized in that the projections (32,33,55) are forced into the retaining element (2,52).

5. A connecting element according to any one of claims 1 to 3, characterized in that the recesses (8,9,54) are formed in the housing bottom (5) by bevels.

6. A connecting element according to claim 1, with the movable retaining element, in the front area thereof, being provided with a recess through which extends a guiding pin disposed on the housing bottom, characterized in that formed in the front marginal area (47) of the housing cover (4,53), at the bottom side thereof, are two projections (48,49) enclosing between themselves the guide pin (20) and protruding until under the upper edge (50) of the guide pin (20) into the housing (1).

7. A connecting element according to claim 6, characterized in that an intake chute (21) is formed on the front side of the guiding pin (20).

## Revendications

1. Elément d'assemblage pour réunir de manière à pouvoir les séparer deux composants d'un bâti, notamment un profilé servant de montant et un profilé servant de châssis, ledit élément d'assemblage étant disposé de manière fixe à l'intérieur du profilé servant de châssis, réalisé en forme de profilé creux, et présentant à l'intérieur d'un boîtier au moins un élément de maintien amovible à l'aide duquel l'élément d'assemblage, et donc également le profilé servant de châssis, peuvent être assemblés de manière à pouvoir être séparé, au profilé servant de montant, et un excentrique étant monté de manière rotative dans le boîtier, cet excentrique présentant au moins une tête d'excentrique, une disque d'excentrique et un coussinet au moyen duquel l'élément de maintien amovible est guidé longitudinalement à l'intérieur du boîtier ce qui a pour effet d'amener un composant de l'élément de maintien faisant saillie du côté frontal du boîtier en prise avec une rainure longitudinale pratiqueé dans le profilé servant de montant, et la tête d'excentrique du boulon d'excentrique pouvant être enfoncé dans le boîtier en s'opposant à la force d'un ressort peut être encastrée dans un perçage pratiqué dans le profilé servant de châssis, l'élément d'assemblage comportant une sécurité qu'empêche la mobilité axiale de l'excentrique dans la position d'insertion de l'élément de maintien, caractérisé par le fait que cette sécurité est constituée au moins d'une projection (32,33,55) prévue sur l'élément de maintien (2,52) amovible et au moins une encoche (8,9,54) formée à l'intérieur du fond de boîtier (5), la projection (32,33,55) et l'encoche (7,8,54) étant disposées et dimensionées de telle sorte l'une par rapport à l'autre que la projection (32,33,55) soit disposée dans la position de retirage de l'élément de maintien (2,52) vis-à-vis l'encoche (8,9,54) pratiquée au fond de boîtier (5) en permettant donc une mobilité axiale de l'excentrique (3), tandis qu'elle soit hors de prise avec l'encoche dans la position d'introduction de l'élément de maintien (2,52) et s'appuie au fond de boîtier (5) et que de ce fait toute mobilité axiale de l'excentrique (3) est alors empêchée.

2. Elément d'assemblage selon la revendication 1, caractérisé par le fait que deux projections (32,33) sont formées sur l'élément de maintien (2,52) amovible dans la zone entre l'ouverture de passage (6) pratiquée au fond de boîtier (5) pour le coussinet (29) de l'excentrique (3) et l'encoche (7) pour recueillir le ressort.

3. Elément d'assemblage selon la revendication 2, caractérisé en ce qu'une autre projection (55) est formée dans la section arrière de l'élément de maintien (52) amovible.

4. Elément d'assemblage selon l'une des revendications 1 à 3, l'élément de maintien amovible étant consituté en tôle d'acier, caractérisé par le fait que les projections (32,33,55) sont enfoncées dans l'élément de maintien (2,52).

5. Elément d'assemblage selon l'une des revendications 1 à 3, caractérisé en ce que les évidements (8,9,54) sont formés à l'intérieur du fond de boîtier (5) par des chanfreins.

6. Elément d'assemblage selon la revendication 1, l'élément de maintien amovible étant prévu d'un évidement dans sa zone antérieure à travers duquel s'étend une tige de guidage disposée au fond de boîtier, caractérisé par le fait que deux projections (48,49) sont formées dans la zone marginale antérieure du couvercle de boîtier (4,53) sur le bord inférieure de celui-ci, les projections enfermant entre eux la tige de guidage (20) et s'étendant qu'à une distance minimale du bord supérieur (50) de la tige de guidage (20) vers l'intérieur du boîtier (1).

7. Elément d'assemblage selon la revendication 6, caractérisé par le fait qu'un chanfrein (21) est formé au côté antérieur de la tige de guidage (20).
